Europäisches Patentamt

**European Patent Office**

Office européen des brevets

(11) Veröffentlichungsnummer: **0 098 425**
**B1**

(12) # EUROPÄISCHE PATENTSCHRIFT

(45) Veröffentlichungstag der Patentschrift:
27.08.86

(51) Int. Cl.⁴: **F 16 J 15/08,** F 16 L 23/00

(21) Anmeldenummer: **83105900.1**

(22) Anmeldetag: **16.06.83**

(54) **Verfahren zur Herstellung einer Metalldichtung für Flanschverbindungen sowie nach diesem Verfahren hergestellte Dichtung.**

(30) Priorität: **07.07.82 DE 3225361**

(43) Veröffentlichungstag der Anmeldung:
**18.01.84 Patentblatt 84/3**

(45) Bekanntmachung des Hinweises auf die Patenterteilung:
**27.08.86 Patentblatt 86/35**

(84) Benannte Vertragsstaaten:
**AT CH DE FR GB IT LI NL SE**

(56) Entgegenhaltungen:
**CH - A - 362 893**
**FR - A - 596 311**
**FR - A - 2 074 714**

(73) Patentinhaber: **Leybold-Heraeus GmbH, Bonner Strasse 504 Postfach 51 07 60, D-5000 Köln 51 (DE)**

(72) Erfinder: **Grein, Lutz, Kiefernweg 7, D-6450 Hanau 1 (DE)**
Erfinder: **Matthiensen, Günter, Birkenhainerstrasse 39, D-6450 Hanau 1 (DE)**

(74) Vertreter: **Leineweber, Jürgen, Dipl.-Phys., Am Heidstamm 78 a, D-5000 Köln 40 (DE)**

ACTORUM AG

## Beschreibung

Die Erfindung bezieht sich auf ein Verfahren zur Herstellung einer Metalldichtung für Flanschverbindungen, bei dem ein Drahtabschnitt verwendet wird, welcher durch Biegen zur Bildung der gewünschten Dichtform bearbeitet wird und die freien Enden der Dichtung miteinander verbunden, z.B. verschweisst oder verlötet, werden, insbesondere für Hochvakuumzwecke. Ausserdem bezieht sich die vorliegende Erfindung auf eine nach diesem Verfahren hergestellte Metalldichtung.

Ein Verfahren dieser Art und ein danach hergestellter Ring sind durch die CH-A-362 893 bekannt. Auch die Schwierigkeiten, die bei dem Einsatz eines derartigen, im Querschnitt kreisförmigen Ringes insbesondere bei nicht horizontal angeordneten Flanschen bestehen, sind offenbart.

Aus dem DE-U 1 762 330 und auch aus der erwähnten CH-A-362 893 ist es bekannt, Metalldichtringe für Flanschverbindungen aus Aluminiumblech zu fertigen. Das geschieht durch Ausstanzen von Kreisringen aus dem Aluminiumblech und anschliessendes Stauchen der Innenkante des Kreisringes zur Bildung eines Dichtwulstes. Nachteilig an diesem vorbekannten Verfahren ist, dass es bei grossen und insbesondere von der Kreisform abweichenden Dichtungsquerschnitten einen wirtschaftlich nicht mehr vertretbaren technischen Aufwand erfordert.

Aus der FR-A-596 311 sind Metalldichtsysteme bekannt, die entweder aus einem Ring mit einem innen oder aussen umlaufenden Zentrieransatz bestehen oder mehrere konzentrische Ringe aufweisen, die untereinander durch Verstrebungen verbunden sind. Die Herstellung von Dichtsystemen dieser Art kann ebenfalls durch Stanzen erfolgen, so dass der Nachteil eines hohen technischen Aufwandes, insbesondere bei der Herstellung von Dichtungen mit grossen Durchmessern oder unterschiedlichen Krümmungen, ebenfalls besteht.

Zur Beseitigung dieses Nachteils wurde deshalb bereits vorgeschlagen, Flanschverbindungen für den Einsatz in radioaktiven, toxischen oder explosiven Bereichen oder auch für Hochvakuumzwecke mit Dichtungen aus Aluminiumdraht auszurüsten. Vorzugsweise wird ein Draht aus Reinstaluminium von 1 bis 3 mm Durchmesser verwendet. Diese Drähte werden aufgespult geliefert. Zur Herstellung einer Dichtung wird ein Drahtabschnitt gewünschter Länge abgespult. Dieser Abschnitt wird in die Form der gewünschten Dichtung gebracht und zusammengeschweisst. Die Montage derartiger Dichtungen ist insbesondere dann kompliziert, wenn die abzudichtenden Flanschflächen vertikal liegen. Bisher erfolgte eine Fixierung der Dichtungen mittels Klebebändern in der Montagelage. Dann wurde an einigen Stellen der Dichtung ein Siliconkleber aufgetragen, nach dessen Abbinden die Klebebänder entfernt werden konnten. Nachteilig an dieser Montage ist weiterhin, dass trotz sorgsamster Handhabung ein Benetzen der Dichtung auf der Mediumseite oder zwischen Dichtung und Dichtfläche mit Siliconkleber nicht vermieden werden kann. Da verschiedene Betriebsmedien, z.B. $UF_6$, mit diesem Kleber spontan reagieren, ist die Gefahr von Undichtigkeiten gross. Für viele Anwendungsfälle ist deshalb diese Befestigungstechnik nicht mehr brauchbar.

Der vorliegenden Erfindung liegt die Aufgabe zugrunde, ein Verfahren zur Herstellung einer Metalldichtung für Flanschverbindungen der eingangs erwähnten Art anzugeben sowie eine danach hergestellte Metalldichtung zu schaffen, welche die Ausnutzung der besherigen Vorteile von vorzugsweise aus Aluminium bestehenden Drahtdichtungen hinsichtlich Dichtigkeit und Wirtschaftlichkeit erlauben und welche die Nachteile bei der Montage mit Silicon-Klebern nicht mehr aufweisen.

Zur Lösung dieser Aufgabe wird zur Herstellung einer Metalldichtung für Flanschverbindungen vorgeschlagen, dass ein im Querschnitt etwa schlüssellochförmiger Profildrahtabschnitt, dessen dickerer Querschnittsteil den Dichtwulst bildet und dessen dünnerer Querschnittsteil der Halterung der Dichtung auf einem der beiden Flansche dient, in den mit Krümmungen zu versehenden Bereichen je nach Krümmungsradius von kleineren oder grösseren Abschnitten seines dünneren Querschnittsteiles befreit wird. Vorzugsweise sind auch die Enden des Profildrahtabschnittes vor dem Verbinden von ihren dünneren Querschittsteilen befreit.

Bei einer in dieser Weise hergestellten Dichtung übernimmt der Dichtwulst die Funktion des vorbekannten Drahtes mit allen seinen Vorteilen. Seine vorzugsweise nach aussen gerichteten «Fahnen» gewährleisten, dass die Fixierung der Dichtung mit Silicon-Klebern ohne Benetzen des Dichtwulstes selbst möglich ist. Das erfindungsgemässe Verfahren erlaubt nach wie vor die Herstellung von Dichtungen mit beliebiger Form und beliebigem Durchmesser, was durch die zumindest teilweise Entfernung des dünneren Querschnittsteiles des Profildrahtabschnittes möglich ist. Im übrigen ist wegen der verbliebenen «Fahne» die Steifigkeit des Dichtringes grösser, so dass seine Handhabung einfacher ist.

Aus der FR-A 2 074 714 ist es zwar schon bekannt, stahlbeschichtete Profilleisten vor dem Biegen mit Einschnitten zu versehen; Metalldichtungen für Flanschverbindungen sind nicht angesprochen.

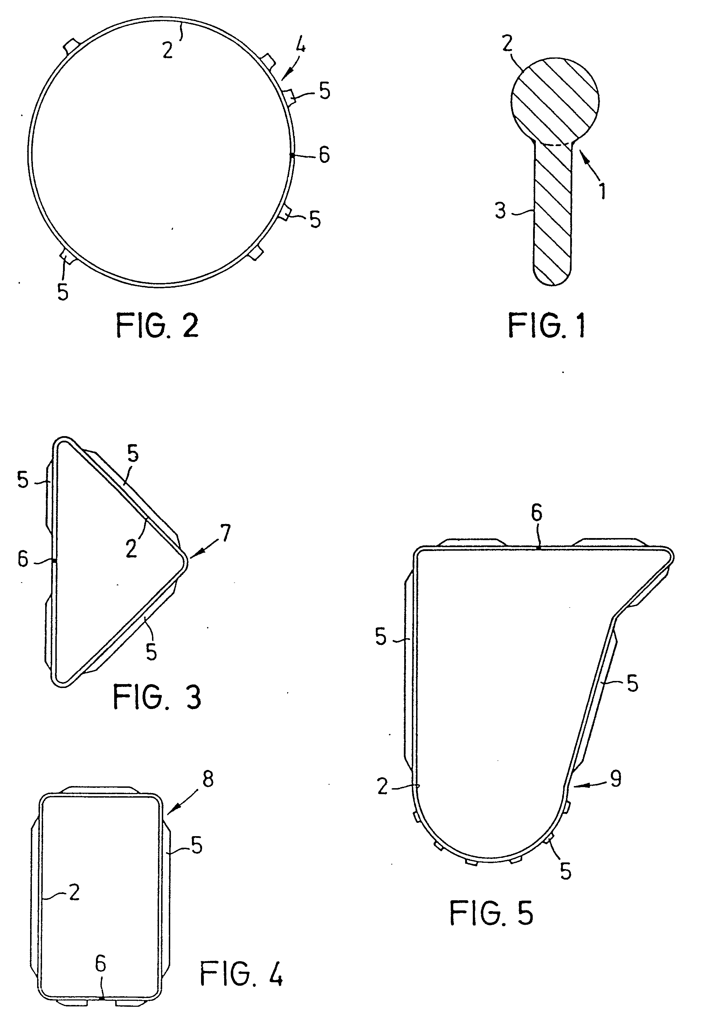

Vorteile und Einzelheiten der Erfindung sollen anhand von in den Figuren 1 bis 5 dargestellten Ausführungsbeispielen erläutert werden.

Fig. 1 zeigt den Querschnitt eines Profilleistenstabes 1, von dem bei der Herstellung der erfindungsgemässen Dichtung ausgegangen wird. Der Querschnitt hat im wesentlichen die Form eines Schlüsselloches. Sein dickerer Querschnittsteil 2 bildet den Dichtwulst und hat z.B. einen Durchmesser von einigen Millimetern. Sein dünnerer Querschnittsteil 3 wird vor dem Biegen der Dichtung in den mit Krümmungen zu versehenden Bereichen derart ausgeklinkt, dass nur der Dichtwulst 2 verbleibt.

Danach erfolgt das Biegen des Profilleistenstabes vorzugsweise derart, dass die verbliebenen «Fahnen» nach aussen gerichtet sind. Die freien Enden werden miteinander verbunden, vorzugsweise verschweisst. Ein gegebenenfalls verbliebener Schweisswulst wird nach dem Schweissen abgearbeitet.

Fig. 2 zeigt eine nach diesem Verfahren hergestellte Dichtung 4 in Kreisform. Er weist nur wenige und kurze Fahnen 5 auf, so dass die Gleichmässigkeit der Kreisform dadurch nicht beeinträchtigt ist. Der Schweissstoss ist mit 6 bezeichnet.

Die Fig. 3, 4 und 5 zeigen Dichtungen mit von der Kreisform abweichenden Formen. Der Dichtwulst ist jeweils wieder mit 2 bezeichnet. Die verbliebenen Fahnen 5 sind insbesondere auf geraden Abschnitten der Dichtung sehr lang gestaltet, so dass sie versteifend wirken. Die Schweissstösse tragen jeweils das Bezugszeichen 6. Auch im Bereich dieser Schweissstösse sind Fahnen nicht vorhanden, so dass ein einfaches Einspannen dieser Bereiche in Spannbacken zum Zwecke des Verschweissens der freien Enden möglich ist. Bei besonders komplizierten Dichtungsformen können auch zwei Schweissstösse vorhanden sein.

## Patentansprüche

1. Verfahren zur Herstellung einer Metalldichtung für Flanschverbindungen, bei dem ein Drahtabschnitt (1) verwendet wird, welcher durch Biegen zur Bildung der gewünschten Dichtform bearbeitet wird und die freien Enden der Dichtung miteinander verbunden, z.B. verschweisst oder verlötet, werden, dadurch gekennzeichnet, dass ein im Querschnitt etwa schlüssellochförmiger Profildrahtabschnitt (1), dessen dickerer Querschnittsteil (2) den Dichtwulst bildet und dessen dünnerer Querschnittsteil (3) der Halterung der Dichtung auf einem der beiden Flansche dient, in den mit Krümmungen zu versehenden Bereichen je nach Krümmungsradius von kleineren oder grösseren Abschnitten seines dünneren Querschnittsteiles befreit wird.

2. Verfahren nach Anspruch 1, dadurch gekennzeichnet, dass auch die Enden des Profildrahtabschnittes (1) vor dem Verbinden von ihren dünneren Querschnittsteilen (3) befreit werden.

3. Nach einem der Verfahren nach Anspruch 1 oder 2 hergestellten Dichtung, die im Querschnitt die Form eines Schlüssellochs aufweist, dadurch gekennzeichnet, dass die Dichtung nur abschnittsweise in Bereichen mit verbliebenen Fahnen (5) im Querschnitt die Form eines Schlüsselloches hat.

4. Dichtung nach Anspruch 3, dadurch gekennzeichnet, dass die verbliebenen Fahnen (5) des dünneren Querschnittsteils (3) des Profildrahtabschnittes (1) zur Befestigung der Dichtung an einem Flansch geeignet gestaltet sind.

5. Dichtung nach Anspruch 3 oder 4, dadurch gekennzeichnet, dass sie aus Aluminium, vorzugsweise Reinstaluminium, besteht.

## Claims

1. A process for producing a metallic seal for flange joints, wherein a wire section (1) is used which is worked by bending to form the desired seal shape and wherein the free ends of the seal are connected, for example welded or soldered, together, characterized in that a profile wire section (1) with an approximately keyhole-shaped cross-section, whose thicker cross-sectional part (2) forms the seal bead and whose thinner crosssectional part (3) serves to hold the seal on one of the two flanges, is relieved, in the areas to be provided with bends, of smaller or larger sections, depending on the bend radius, of its thinner cross-sectional part.

2. A process according to claim 1, characterized in that the ends of the profile wire section (1) are also relieved of their thinner cross-sectional parts before being connected together.

3. A seal produced according to the process according to claim 1 or claim 2 and having, in cross-section, the shape of a keyhole, characterized in that the seal only has the shape, in crosssection, of a keyhole in areas where lugs (5) remain.

4. A seal according to claim 3, characterized in that the remaining lugs (5) of the thinner crosssectional part (3) of the profile wire section (1) are of suitable shape for attaching the seal to a flange.

5. A seal according to claim 3 or claim 4, characterized in that it consists of aluminium, preferably high-purity aluminium.

## Revendications

1. Procédé pour fabriquer un joint d'étanchéité métallique pour assemblages à brides ou analogues, selon lequel on utilise une longueur de fil métallique (1), que l'on façonne par courbure à la forme désirée du joint et dont on réunit les deux bouts, par exemple par soudage, caractérisé en ce que l'on utilise une longueur de fil métallique profilé (1), ayant une section droite en forme de trou de serrure, dont la partie épaisse (2) forme le bourrelet d'étanchéité et dont la partie mince (3) sert à la fixation du joint sur l'une des deux brides, et on enlève, sur les portions de fil à courber, des tronçons plus ou moins longs, suivant le rayon de courbure, de la partie mince en section droite.

2. Procédé selon la revendication 1, caractérisé en ce que l'on débarrasse également les bouts de la longueur de fil profilé (1) de leurs parties minces (3), en section droite, avant de les réunir.

3. Joint d'étanchéité fabriqué selon le procédé de la revendication 1 ou 2, possédant en section droite la forme d'un trou de serrure, caractérisé en ce qu'il présente seulement une section droite en forme de trou de serrure sur certains tronçons, où des pattes (5) sont restées en place.

4. Joint selon la revendication 3, caractérisé en ce que les pattes (5), constituées par les portions restées en place de la partie mince (3) en section droite de la longueur de fil profilé (1), sont conformées en vue de la fixation du joint sur une bride.

5. Joint selon la revendication 3 ou 4, caractérisé en ce qu'il est en aluminium, de préférence en aluminium extra-pur.

0 098 425

FIG. 2

FIG. 1

FIG. 3

FIG. 5

FIG. 4